# EUROPEAN PATENT APPLICATION

(11) **EP 1 522 842 A1**
(43) Date of publication of application: **13.04.2005**
(21) Application number: 03022380.4
(22) Date of filing: 06.10.2003
(51) Int. Cl.: G01N 17/00, C09D 5/16

(54) **Test system for the evaluation of a coating against biofouling and fluid shear forces**

(71) Applicant: Symrise GmbH & Co. KG, 37603 Holzminden (DE)
(72) Inventor: Rabenhorst, Jürgen, 37671 Höxter (DE)
(74) Representative: Eisenführ, Speiser & Partner

(57) **Abstract**

Described is a test system for the evaluation of a coating to biofouling and fluid shear forces in natural seawater, comprising: a support structure for holding test panels, a first array of separate, spaced apart test panels being arranged on the support structure (a) in two or more coaxial circles around an axis and (b) in a plane substantially perpendicular to the axis, the test panels being provided with the same or different coatings on one side, a drive assembly being arranged so that the first array of test panels on the support structure can be rotated around the axis.

## Description

The present invention concerns a test system for the evaluation of a coating to biofouling and fluid shear forces which can be used in natural water like seawater. The invention was made in particular due to the need to optimize testing devices and protocols for marine coatings and develop improved accelerated test systems that best simulate the erosion process on marine paints as ships travel.

The marine paint industry is undergoing dynamic change in redefining the benchmark technologies used in the coatings market. From the 1970's through the end of the century, tributyl tin (TBT) and self-polishing coatings dominated the industry and provided the market with effective, reasonably-priced, high performance protective paint systems for ships to avoid fouling of their underwater surfaces. With the then looming ban on TBT by the International Maritime Organization (IMO), new resin technologies and coating formulations were developed, using cuprous oxide in combination with booster biocides to achieve the same goal. By January 1, 2003, the IMO treaty confirmed this TBT ban which effectively ended the manufacturing of TBT-based paints followed by a ban in 2008 on the presence of TBT on all ships. Industry has already realized that the use of toxic components that are indiscriminately released into the marine environment by leaching from marine paints is a thing of the past. There is also the possibility that other substances, such as cuprous oxide, though considerably less toxic than TBT, may eventually prove to be harmful to the marine ecosystem.

Marine paint formulators are under pressure to develop new coating systems with reduced copper, preferably metal-free systems, and versatility in color (apart from the traditional red imparted by the cuprous oxide binder) without sacrificing the performance targets required by the shipping industry. Innovation within the industry is fueling the race to develop a superior marine paint. This is clearly apparent from the numerous patents being issued for novel paint systems in the last few years. However, progress in the development of commercial products is hampered by the typically long duration of marine exposure panel tests that is required to verify efficacy of an experimental formulation before undertaking ship tests on oceangoing vessels. There is therefore a need to either optimize the testing protocols or develop improved accelerated test systems that best simulate the erosion process as the ship travels.

A number of different test designs is used by now.

### PANEL TEST: STATIC IMMERSION

The American Society for Testing Materials (ASTM) has published a guide referred to as D 3623 "Standard Test Method for Testing Antifouling Panels in Shallow Submergence" which served to standardize the procedures used for testing of marine coatings in the aquatic environment. In this system, the coated, usually flat, panels are submerged in a heavily fouled marine environment, typically port areas, and left for periods of time to determine the degree of resistance provided by the test coatings against attachment of hard (barnacles, oysters) and soft (algae, seaweeds, sponges, etc) fouling. One major disadvantage of static testing ist the lack of abrasive forces which occur as the ship travels through the water.

### Evaluations of Test Panels

The ASTM D 3623 provides an excellent guideline for evaluating the condition of the panels after immersion. With the advent of digital photography and internet, it has become easier to obtain real time data on the conditions of the panels.

Objective evaluation is a very difficult process since fouling on a panel typically represents a diverse fouling community present at each site. The most reasonable fouling evaluation that provides suitable objective data is to use a gravimetric method to get a relative fouling abundance. Such data are used to complement the subjective evaluations afforded through the ASTM method and from the digital photographic records.

### DYNAMIC TESTING

ASTM D 4938 describes the use of high velocity seawater flowing through a channel with coated panels to simulate erosion of the coatings as the ship travels through the water.

Another version of the test is described in ASTM D 4939, commonly referred to as the rotating drum test, designed to do similar simulations. These test systems served as the workhorse of the industry and allows for a better simulation of the stress on the coatings. This exposure to natural seawater consists of alternate static and dynamic cycles of typically 30 days each for a total length of time of one or more years. By retrieving the panels after a period of time and immersion in a fouling environment one can then determine how the antifouling performs. The use of high velocity water has some drawbacks, such as the high cost of construction and operation of the system. The rotating drum test equipment can also be expensive, requires use of curved panels and accommodates a smaller number of test panels per drum. Another disadvantage of the current dynamic test system in use today is that the machine simulates erosion only at one speed at any one time so that testing at various equivalent ship speeds will require change in rotation of the drum or the velocity of the water during the course of the erosion testing.

In GB 1 457 590 the performance of marine paints in relatively moving seawater was tested. Discs covered with antifouling paint were mounted on a shaft driven by an electric motor and immersed in flowing sea-water contained in a vessel having an inlet and an overflow. The peripheral speed of the disc was 38 knots (43.7 miles per hour). Disadvantages of this testing system are, inter alia, single speed simulation, the absence of biofouling conditions and vortex formation at elevated speed due to the container around the rotating discs.

It was the objective of the present invention to provide improved test systems for the evaluation of a coating to biofouling and fluid shear forces.

According to a first aspect of the present invention there is now provided a test system for the evaluation (dynamic testing) of a coating to biofouling and fluid shear forces in natural seawater, comprising:
- a support structure for holding test panels,
- a first array of separate test panels being arranged on the support structure (a) in two or more coaxial circles around an axis and (b) in a plane substantially perpendicular to the axis, the test panels being provided with the same or different coatings on one side,
- a drive assembly being arranged so that the first array of test panels on the support structure can be rotated around the axis.

It is to be understood that herein the axis is an imaginary line, and is not a three-dimensional material element of the test system.

As opposed to the teaching of GB 1 457 590 the test system according to the present invention allows for (i) multiple speed simulations, (ii) the adjustment of biofouling conditions which are identical with or at least similar to biofouling conditions experienced in practical situations at ship hulls, and (iii) virtually vortex-free simulations even at elevated speed as no container around the system is needed.

Preferably, the support structure of the test system according to the present invention comprises (a) a disc or (b) concentric support rings for supporting the first array of test panels.

In order to allow for a number of three or more different speeds to be simulated when using only one test system according to the present invention, the first array of test panels comprises favourably three, four or more coaxial circles of test panels, each coaxial circle corresponding to one distinct test speed when the test system is rotated around its axis.

In particularly preffered embodiments of the test system according to the present invention, the test system comprises at least a second array of test panels, the second array of test panels being arranged on the support structure in an axial distance from the first array of test panels, the support structure comprising (a) a disc or (b) concentric support rings or (c) other support elements for supporting the second array of test panels, and the second array of test panels comprising a single circle or two, three, four or more coaxial circles of spaced-apart test panels.

Of course, when two, three or more arrays of separate, spaced apart test panels are arranged on the support structure (in axial distances from one another), favourably each array (i.e. not only the first) is arranged (a) in two or more coaxial circles around the same axis and (b) in a plane substantially perpendicular to the same axis.

Typically, the first, second, and, if present, any further array of test panels are supported by the same type of support structure, i.e. discs, concentric support rings or other support elements. For supporting the first, second, and, if present, any further array of test panels, the support structure will preferably (but not necessarily) be of the same diameter. If three or more support structures (e. g. discs) are used (in order to support three or more arrays of test panels), they are favourably arranged in axial equidistance.

The drive assembly of the test system according to the present invention preferably comprises a shaft for rotating the first array of test panels around the axis, the support structure being mounted to the shaft. If two or more arrays are present in the test system according of the present invention, the shaft will favourably be arranged to drive all arrays simultaneously. The (imaginary) shaft-axis is then typically identical with the (imaginary) axis of the two or more coaxial circles of the first array around which the first array of test panels on the support structure can be rotated (see discussion of preferred embodiments and figures below).

Favourably, the test panels used in the test system of the present invention are flat on at least one side where the coating is provided. Generally, the use of test panels which are flat on both sides is preferred.

Favourably, the test panels are of rectangular or trapezoid shape, and the test panels are favourably arranged so that they are spaced from one another.

According to a second aspect of the present invention there is provided a method for evaluating a coating on a substrate to biofouling and/or fluid shear forces in water, comprising the following steps:
- providing one or more test panels coated with a coating which is to be evaluated,
- assembling a test system according to the present invention (in one of the embodiments discussed above) using the test panel(s) provided,
- immersing the assembled test system into water so that the test panels provided are in contact with water,
- rotating the test system at a defined rotational speed for a defined time,
- upon rotation evaluating the test panels for the effects of biofouling and/or fluid shear forces.

Preferably, the test system is immersed freely in water so that vortex formation is reduced in comparison with a test set-up where the test system is enclosed in a drum or other container (as it is the case according to GB 1 457 590).

Naturally, the method of the present invention can be used where the water is natural seawater or water from a natural river or lake.

In order to obtain test results for a given type of coating at two different speeds, during assembly of the test system preferably at least two test panels which are provided with the same coating are mounted in different distances from the axis, e.g. by assigning them to two different ones of the two or more coaxial circles of the first array.

In preferred embodiments of the method according to the present invention at least the test panels of one coaxial circle of the assembled test system are rotated with a peripheral speed within the range of 150-1300 m/min, which corresponds to the typical travel speed of ships. Favourably at least the panels of two of the coaxial circles of the first array are rotated with a peripheral speed within said range. More favourably, all panels of the test system are rotated with a peripheral speed within said range.

A third aspect of the present invention concerns the use of a test system according to the present invention for the evaluation of a marine antifouling coating to biofouling and fluid shear forces. The preferred embodiments discussed with respect to the first and/or second aspect of the present invention are preferred as well with respect to this third aspect of the invention.

The invention will now be further described by reference to preferred embodiments and the accompanying drawings.

Preferred embodiments of (a) test system (hereinafter also referred to as "Dynamic Testing Device") and (b) method according to the present invention:

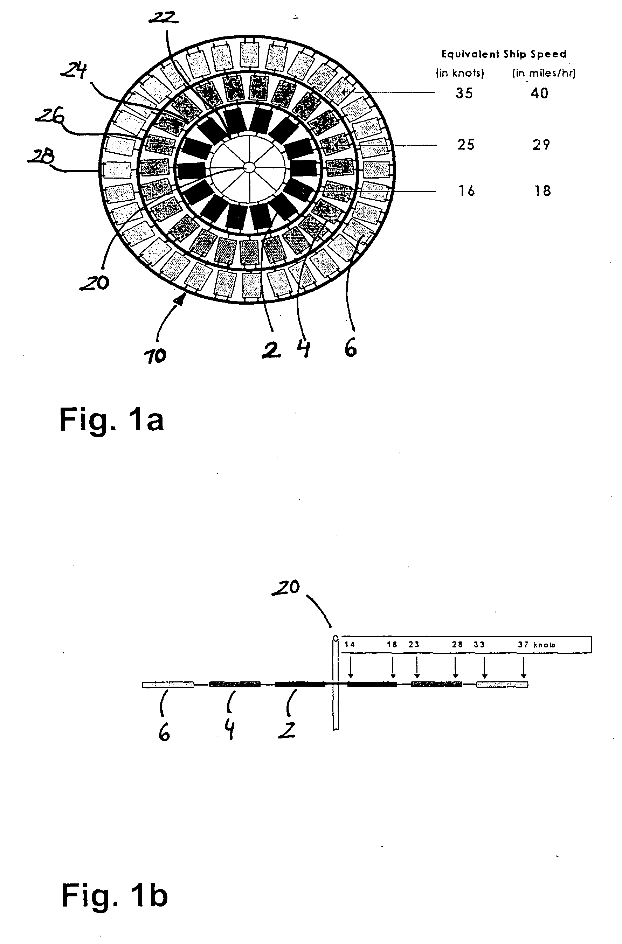

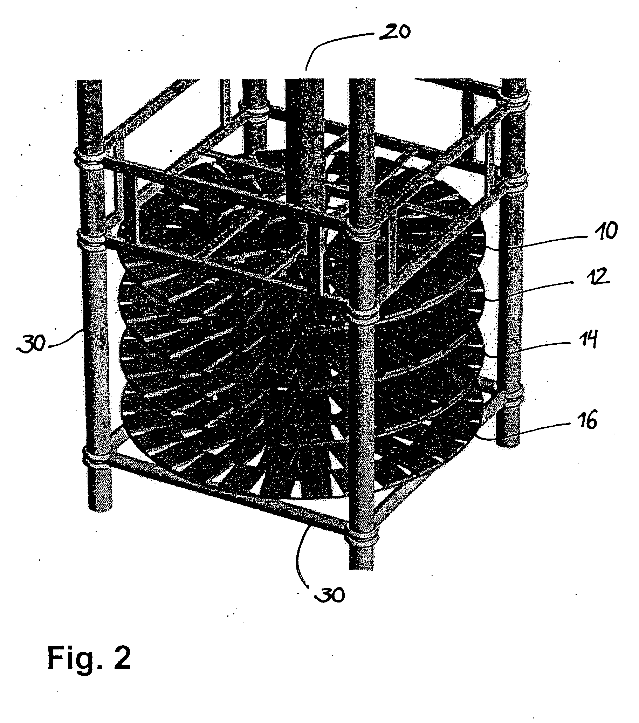

The dynamic testing device of the present invention has been designed to address critical issues related to the dynamic test - increased number of panels, use of flat panels (e.g. those used in the static testing method), and simultaneous simulation at multiple ship speeds. A diagrammatic representation of a preferred new dynamic testing device is shown in Figures 1 and 2. Instead of mounting curved panels vertically on the outer surface of a "drum," flat, rectangular panels are oriented horizontally within a support ring structure (see Fig. 1), using bolts to hold the panel on the edges. It is then possible to construct multiple ring structures that can be rotated at a fixed speed on a central shaft. This is shown in Fig. 2, according to which four parallel ring structures 10, 12, 14, and 16 are driven by a shaft 20 and arranged within a frame structure 30. Each of the four ring structures 10, 12, 14, 16 supports three coaxial rings of rectangular, spaced-apart test panels mounted between coaxial support rings 22, 24, 26, 28. Since the velocity experienced by the panel depends on the distance from the center of the support ring structure, the panels placed at various positions on the ring structure will therefore experience different velocity and shear stress. Figures 1 a and 1b show the positioning of panels 2 (inner circle), 4 (middle circle), 6 (outer circle) on ring structure 10 (see Fig. 2) and the equivalent ship speeds when ring structure 10 is rotating at 37 knots peripheral speed (with respect to the outer coaxial ring of test panels 6 depicted). In Fig. 1 and 2 the same reference numerals are used for the same or similar elements.

To avoid vortex formation, which will reduce the speed of the test panels relative to the water, the device should be installed freely and not in a drum or other container. Especially advantageous is testing in seawater.

Instead of ring structures 10, 12, 14, 16 discs can be used.

The dynamic testing device is favourably mounted on a floating platform, and lifting means are preferably provided in order to allow for a lift out of the device out of the water for panel installation, inspection, or removal.

### Example:

The dynamic testing device offers the opportunity to investigate the shear stress on the coating at ship speed of 18 to 40 miles per hour or higher/lower speeds by simply changing the speed of rotation. Flat panels can be used to permit erosion tests on both sides of the panels. A machine with a capacity of 280 standard panels (4 in x 6 in) was constructed with these specifications and has been in operation for one year in seawater simulating over 100,000 miles of travel.

## Claims

1. Test system for the evaluation of a coating to biofouling and fluid shear forces in natural seawater, comprising:
- a support structure for holding test panels,
- a first array of separate test panels (2, 4, 6) being arranged on the support structure (a) in two or more coaxial circles around an axis and (b) in a plane substantially perpendicular to the axis, the test panels being provided with the same or different coatings on one side,
- a drive assembly being arranged so that the first array of test panels (2, 4, 6) on the support structure can be rotated around the axis.

2. Test system according to claim 1, wherein the support structure comprises (a) a disc (10) or (b) concentric support rings for supporting the first array of test panels.

3. Test system according to any of claims 1 or 2, wherein the first array of test panels (2, 4, 6) comprises three, four or more coaxial circles of test panels.

4. Test system according to any of the preceding claims, comprising at least a second array of test panels,
the second array of test panels being arranged on the support structure in an axial distance from the first array of test panels (2, 4, 6),
the support structure comprising (a) a disc (12) or (b) concentric support rings or (c) other support elements for supporting the second array of test panels, and
the second array of test panels comprising a single circle or two, three, four or more coaxial circles of spaced-apart test panels.

5. Test system according to any preceding claim, wherein the drive assembly comprises a shaft (20) for rotating the first array of test panels (2, 4, 6) around the axis, the support structure being mounted to the shaft (20).

6. Test system according to any preceding claim, wherein the test panels are flat on at least one side where the coating is provided.

7. Method for evaluating a coating on a substrate to biofouling and/or fluid shear forces in water, comprising the following steps:
- providing one or more test panels coated with a coating which is to be evaluated,
- assembling a test system according to any of the preceding claims using the test panel(s) provided,
- immersing the assembled test system into water so that the test panels provided are in contact with water,
- rotating the test system at a defined rotational speed for a defined time,
- upon rotation evaluating the test panels for the effects of biofouling and/or fluid shear forces.

8. Method according to claim 7, wherein the test system is immersed freely in water so that vortex formation is reduced in comparison with a test set-up where the test system is enclosed in a drum or other container.

9. Method according to any of claims 7-8, wherein the water is natural seawater or water from a natural river or lake.

10. Method according to any of claims 7-9, wherein during assembly of the test system at least two test panels which are provided with the same coating are mounted in different distances from the axis.

11. Method according to any of claims 7-10, wherein at least the test panels of one coaxial circle of the assembled test system are rotated with a peripheral speed within the range of 150-1300 m/min.

12. Use of a test system according to any of claims 1-6 for the evaluation of a marine antifouling coating to biofouling and fluid shear forces.
